# EUROPEAN PATENT SPECIFICATION

(11) **EP 2 333 669 B1**
(45) Date of publication and mention of the grant of the patent: **19.09.2012**
(21) Application number: 10015534.0
(22) Date of filing: 10.12.2010
(51) Int. Cl.: G06F 11/36

(54) **Bridging code changes and testing**
Bridging-Code-Änderungen und -Tests
Mise en parallèle de changements de code et de test

(30) Priority: 10.12.2009 US 635412
(43) Date of publication of application: 15.06.2011
(73) Proprietor: SAP AG, 69190 Walldorf (DE)
(72) Inventor: Xu, Xiaochun, 69190 Walldorf (DE); Peng, Yangning, 69190 Walldorf (DE)
(74) Representative: Müller-Boré & Partner Patentanwälte

(56) References cited:
- US-A- 5 673 387
- US-A1- 2003 204 836
- US-A1- 2007 214 391
- US-A1- 2009 138 855
- LOYALL J P ET AL: "Impact analysis and change management for avionics software", AEROSPACE AND ELECTRONICS CONFERENCE, 1997. NAECON 1997., PROCEEDINGS OF THE IEEE 1997 NATIONAL DAYTON, OH, USA 14-17 JULY 1997, NEW YORK, NY, USA,IEEE, US, vol. 2, 14 July 1997 (1997-07-14), pages 740-747, XP010242899, DOI: DOI:10.1109/NAECON.1997.622723 ISBN: 978-0-7803-3725-1

## Description

### TECHNICAL FIELD

The disclosed subject matter relates to test systems and methods in general and code change test systems and methods in particular.

### BACKGROUND

In software maintenance and development, testing is needed to ensure that the software satisfies the given requirements. One area of interest includes changes to existing code, being it either for subsequent steps during initial development or changes made later to the code in the form of updates or upgrades. State of the art quality control means that testing is required to ensure that all functionality is as required by the specifications, either initial or updated.

To this end typically code-changes define the need for test activities and to provide predictions on the impact of code-changes on the product quality. In the case of object oriented programming, the relationships between the objects are important since changes in the software, which often includes changes to or within the objects, can have complex results. It is not rare that even a very small change in coding can cause a large amount of functionalities to fail.

Testing software changes in object oriented programming is known in the art. The data structures and member functions of the object classes in object oriented programming can be examined with relative ease. However, understanding the combined effects of all possible interrelations between the changed and unchanged code and objects is not trivial. A comprehensive full test that encompasses all changes is in time and effort beyond the scope for all but the most trivial programs, as the calculation times soon reach timeframes of multiple centuries and more.

Conventional methods may select tests or test cases by focusing on the most complex software code elements. In other words, test cases targeting the most complex software code elements may be selected. The most complex software code elements may be identified using software complexity metrics. Alternatively, relative software complexity may be used to determine test cases. For example, successive software builds may be compared in order to determine significant changes in the complexity of software code elements. However, it may be desirable to have an alternative way to select test cases.

It is therefore an exemplary object of the disclosed subject matter, to which the disclosed subject matter is not limited, to provide for a method of testing software systems that provides better results, for instance by getting better test results with the same or less effort.

To achieve these and other goals the method according to the disclosed subject matter provides for a selection means to determine the relevance of possible tests. By testing the more relevant section of changes to the code, the test capacity is used to achieve better test quality.

In a different aspect of the disclosed subject matter, the selection means is used to make a better assessment of code changes on product quality. This can be of advantage during development or maintenance to estimate the quality of and risk to the changed code already before the final release has been established.

US 2003/0204836 (Srivastava et al.) discloses a method for prioritizing software tests based on coverage indicators and an indication of impacted areas of the software. Each of the coverage indicators indicates which portions of the software are executed for a respective one of the software tests. The portions of the software include at least one of a plurality of blocks. The indication of impacted areas of the software indicates ones of the plurality of blocks that are modified or new with respect to a previous version of the software. A prioritized list of software tests is output.

US 5 673 387 (Chen et al.) discloses a method for selective regression testing of a software system that determines which test units of a test suite must be re-run after a modification to the software system. The entities which are covered by each test unit are identified. When the software system is modified the entities which were changed by the modification are identified. The test units which need to be re-run are determined by analyzing the change information and the coverage information to select those test units that cover changed entities.

### SUMMARY

In the course of determining the dependent code elements in computer code, a dependency graph for the code is determined. Furthermore, the code changes in the dependent code elements are analyzed and tracked, for instance by tracking transports. The changes in the dependency graph itself are analyzed and tracked. By quantitatively assessing the impact of the respective code changes on a test case by means of different key impact factors, rankings over the key impact factors for the considered test cases can be determined. Based on the ranking, tests can be selected. To supplement the ranking determined based on dependency changes, code complexity, and code sensitivity can be evaluated. By making a selection of tests to be performed, based on the determined code evolution in the form of code changes, along with code complexity and code sensitivity, software testing can be optimized with respect to the available resources, and the tests with the highest impact on quality are most likely to be selected. The determined tests are then conducted and the results determined, stored and reported.

According to the disclosed subject matter a system is provided comprised of a code element dependency graph generator, a dependent code element collector, a code element dependency analyzer, a code change tracker and an impact assessment engine. In one embodiment of the disclosed subject matter the system is provided with a computer landscape.

The subject matter described in the specification can be implemented as a method or as a system, possibly in the form of one or more computer program products. The subject matter described in the specification can be implemented in a data signal or on a machine readable medium, where the medium is embodied in one or more information carriers, such as a CD-ROM, a DVD-ROM, a semiconductor memory, or a hard disk. Such computer program products may cause a data processing apparatus to perform one or more operations described in the specification.

In addition, subject matter described in the specification can also be implemented as a system including a processor, and a memory coupled to the processor. The memory may encode one or more programs to cause the processor to perform one or more of the methods described in the specification. Further subject matter described in the specification can be implemented using various machines.

The details of one or more implementations are set forth in the accompanying drawings and the description below. Other features will be apparent from the description and drawings, and from the claims.

### BRIEF DESCRIPTION OF THE DRAWINGS

FIG. 1 is a representation of an example of an embodiment of the disclosed subject matter,

FIG. 2 is a representation of an example of a section of coding according to the disclosed subject matter,

FIG. 3 is a representation of an example of a section of coding according to the disclosed subject matter,

FIG. 4 is a representation of an example of a section of coding according to the disclosed subject matter,

FIG. 5 is a representation of an example of a section of coding according to the disclosed subject matter,

FIG. 6 is a representation of an example of a section of coding according to the disclosed subject matter,

FIG. 7 is a representation of an example of a section of coding according to the disclosed subject matter,

FIGs. 8A and 8B depict test case T along with various code elements at time ts and time te.

Fig. 9 is a representation of an example of a system according to the disclosed subject matter.

### DETAILED DESCRIPTION

In the following text, a detailed description of examples will be given with reference to the drawings. It should be understood that various modifications to the examples may be made. In particular, elements of one example may be combined and used in other examples to form new examples.

As an example of an implementation of the disclosed subject matter, the programming language Advanced Business Application Programming (ABAP) is used. ABAP is a known fourth generation language, used to program business systems. ABAP has an extension, ABAP Objects, making it capable of object oriented programming. ABAP programs reside in a system database, usually in both source code and generated code. The source code can be inspected and edited with for example an editor tool, like the ABAP workbench. The ABAP programs execute in a runtime system that is part of a kernel. The kernel takes care of processing ABAP statements, screen logic and event responses.

The ABAP language environment, including the syntax checking, code generation and runtime system, is part of a basis component, like for instance SAP Basis. SAP Basis is a computer technological platform that supports software applications, for example implemented in the framework of a SAP web application server. SAP Basis functions as an operating system on which ABAP applications run. Like any operating system, SAP Basis contains both low-level services, as for example memory management, database communication or servicing Web requests, and high-level tools for end users and administrators. These tools can be executables in for example the SAP kernel running directly on the underlying operating system, transactions developed in ABAP, or Web-based interfaces. It is understood that the above is merely one illustrative example to which the disclosed subject matter is not limited.

Typically, SAP data exists and all SAP software runs in the context of an SAP system. Again, it is understood that an SAP system is merely one example embodiment to which the disclosed subject matter is not limited. A system consists of a central relational database and one or more application servers or instances, accessing the data and programs in this database. An SAP system contains at least one instance but may contain more, mostly for reasons of sizing and performance. In a system with multiple instances, load balancing mechanisms ensure that the load is spread evenly over the available application servers.

Installations of the web application server, possibly implemented in computer system landscapes, typically comprise three systems: one for development, one for testing and quality assurance, and one for production. The landscape may contain more systems, for instance separate systems for unit testing and pre-production testing, or it may contain fewer, for instance only development and production, without separate quality assurance. Typically, ABAP programs are created and undergo first testing in the development system. Afterwards they are distributed to the other systems in the landscape. These actions take place under control of the change and transport system (CTS), which is responsible for concurrency control, for instance to prevent two developers from changing the same code at the same time, version management and deployment of programs on the quality assurance and production systems.

The web application server itself consists of three layers: the database layer, the application layer and the presentation layer. These layers may run on the same or on different physical machines. The database layer contains the relational database and the database software. The application layer contains the instance or instances of the system. All application processes, including the business transactions and the ABAP development, run on the application layer. The presentation layer handles the interaction with users of the system. Online access to ABAP application servers can go via a proprietary graphical interface, the SAPGUI, or via a Web browser.

As a fourth generation programming language, ABAP supports object oriented programming. As ABAP supports computer programming for applications in a business environment it supports typical objects in a business environment are, for example, 'Customer', 'Order', or 'Invoice'. These objects can be stored in a business object repository; such objects are integrated in ABAP Objects and belong to the ABAP class library. Objects are instances of classes, and can contain data and can provide services. Data forms the attributes of the object. The services can also be regarded as methods such as operations or functions. Typically, methods operate on private data like for instance the attributes, or state of the object, which may be only visible to the methods of the object. Thus the attributes of an object cannot be changed directly by the user, but only by the methods of the object. This guarantees the internal consistency of the object. Classes can describe objects, and furthermore, objects can be runtime instances of a class. Each instance or object of a class has a unique identity and its own set of values for its attributes. Object references in a program can be identified and addressed by objects by using unique object references. Object references can be used to access the attributes and methods of an object.

In ABAP, as in most object-oriented programming, objects can have the following properties: encapsulation, inheritance, and polymorphism. With encapsulation objects restrict the visibility of their resources, in particular attributes and methods to other users. Every object has an interface, which determines how other objects can interact with it. The implementation of the object is encapsulated, that is, invisible outside the object itself. Inheritance means that an existing class can be used to derive a new class. Derived classes inherit the data and methods of a super class. Polymorphism refers to the feature that identical or identically-named methods behave differently in different classes. In ABAP objects, polymorphism is implemented by redefining methods during inheritance and by using interfaces.

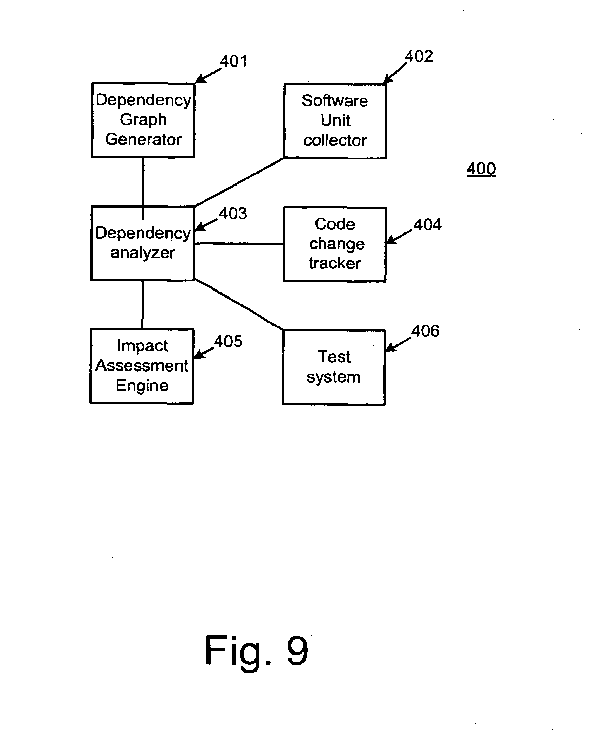

A code analyzer according to the present description may be used to evaluate the architecture of large (or huge) software applications. Possibly combined with a dependency database, a dependency analyzer (as shown in Fig. 9) can be used to determine the most frequently executed blocks of code, where a block of code is comprised of one or more code elements. Thus, the determined blocks of code used by many or most test cases can be easily identified without the use of fine grained (i.e. very granular) software metrics, such as cyclomatic complexity. In some embodiments, each test case has a whole dependency graph. The dependency graph may be implemented as a dependency tree. The most frequently executed (or used) code blocks can be found using the dependency graph. According to a specific example, for each of 10 test cases, a dependency graph can be calculated. The graph can be used to determine the software units of each test case that are executed most often. In contrast, a conventional method uses a runtime measurement system to measure how often an object (i.e. an instance of a class) is called. However, the conventional method only shows functionality used at runtime. The functionality used at runtime may not include all functionality accessible within the dependency graph.

When modifying an existing application, the dependency graph could be evaluated to determine how changes to code elements of the application could affect existing application functionality. In particular, the impact factor of a reuse, extension or modification of existing code elements with respect to existing functionality could be determined. The determined impact factor could then be used as a basis for deciding whether to write new code or to modify existing code. In some cases, code reuse may not be the best option, particularly with regard to a code element that is already being used by many existing code elements. It may be desirable to avoid a situation where an entire application (or a substantial part of the application) depends on a single code element.

In phases of application development or modification, e.g. critical phases such as the emergency correction phase before release, the techniques disclosed in the present application could be used to determine the impact (i.e. impact factor) of code changes on existing functionality. The impact may be determined using a dependency graph, i.e. a dependency tree. In a specific example, an emergency correction or hot-fix (e.g. affecting one or more code elements) could be analyzed to determine the impact of the correction. Such analysis may reduce the risk that a hot-fix affects the stability of the entire application.

In addition, all test cases affected by modified or created code elements could be evaluated and ranked (e.g. by means of a test relevancy ranking). Thus, the test cases most affected by the modified or created code elements could be identified and selected. This may be useful in cases where a large number of test cases exist and only a limited number of the existing tests can be performed.

Moreover, cross-system processes may be difficult to test using conventional methods. A dependency graph can be used to identify relationships between different code elements on different systems. The techniques disclosed in the present application can then be used to evaluate (i.e. rank) test cases in order to test the processes.

In some cases, a code element is implemented as a software unit or a set of software units. A software unit is the smallest traceable coding unit from a software logistics perspective. A software unit may be an object. In procedural programming, a software unit may be an individual function or a procedure. Other implementations are also possible. The set of all software units is called the set of software units, denoted as S, where the software code is identical to the set of software units, or the set of software units is a subset of the software code.

A direct dependency between two software units (for example software units x and y) is denoted as x → y. An example of a direct dependency is a direct call from x to y. Another example of a direct dependency is when a software unit x reads data from a database d, where d is implemented as one or more software units. A software unit dependency graph G is defined as G = (S, C), wherein C is the set of direct dependencies as defined by C = S x S. For a given system and at time t, the software unit dependency graph is denoted as G(t) = (S(t), C(t)).

A dependency between two software units x and y is denoted as x⇒ y and is defined in this example as either

x = y or

x→ y or

∃ z1, z2,..., zn-1, zn so that x → z1 ∧ z1 → z2 ∧ ... A zn-1 → zn ∧ zn→ y

The example shows that there may be an arbitrary number of dependencies between x and y.

When there is at least one dependency between x and y (e.g. z1, such that x → z1 and z1 → y), x may be understood to be indirectly dependent on y; thus, in this case, there is an indirect dependency between x and y.

The dependent software units of the software unit x are in this example denoted as Dsu(x), and are defined by the set of software units {z | x⇒ z}.

Test cases are, according to the disclosed subject matter, tests to confirm the correct functioning of a section of code. A test case may include conditions, variables, an identifier, a description, related requirement(s), a depth, a category, and other information. The test cases may also be part of a series of test cases and may include an order of execution number or a set of prerequisites. Test cases are known in the art, and are available to the person skilled in the art. According to the disclosed subject matter, a number of known and suitable types of test cases can be employed. In this example, for a given a test case T, for which is known that the software units k1, k2, ..., kn are relevant, then the set K = {k1, k2, ..., kn} is called the known dependent software units of the test case T, denoted as Ksu(T). Furthermore, the set D = {d | ∃ k∈ K with k⇒ d} is called the dependent software units of the test case T, denoted as Dsu(T). For a given system and at time t, the dependent software units of the test case T is denoted as Dsu(T, t).

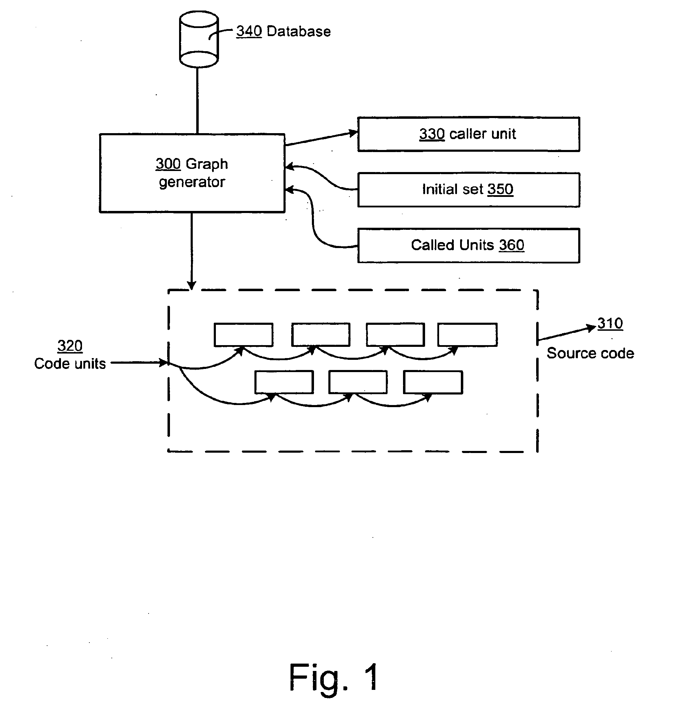

To determine the dependencies among the software units comprised in the software code, in one example implementation of the disclosed subject matter, use is made of a dependency graph. The dependency graph may be implemented as a directed graph. The dependency graph indicating the interdependencies within the software code, and in particular between the software units, is, according to this example, made by a software unit dependency graph generator 300, as shown in fig. 1. In this example the generator functions as follows. An initial set of software units 350 is taken as input; this initial set can be, for example, code of a certain version of a software program. In particular the initial set of software units 350 can be a basis or start version of the software, for instance a current or actual version. Then, for each software unit in the initial set 350, a caller software unit 330 is determined. The code 310 is then scanned for each software unit 320 in the initial set 350, and for each software unit found in the scan, the called software units are identified; the caller and called software units are stored as pairs in a database 340. Consecutively, the code of all identified called software units 360 is scanned, and the dependencies of the called software units 360 are also located and stored in the database 340. Scanning and locating operations performed on the called software units 360 may be carried out using recursion. The stored sets of pairs linking caller and called software units represent the complete set C of direct dependencies of all software units. Also, the set of all caller and called software units is the set of software units S. The information in the database 340 can be expressed in a software unit dependency graph G that is dependent on S and C, in formula G = (S, C).

In a specific example, the initial set of software units 350 may include the following two software units: CRM_ORDER_READ and CRM_ORDER_MAINTAIN. CRM_ORDER_READ and CRM_ORDER_MAINTAIN may be dependencies known to users (e.g. developers). The following table shows the calculated dependencies of CRM_ORDER_READ and CRM_ORDER_MAINTAIN:

| **Number of software units used under software component** | **CRM_ORDER_READ** | **CRM_ORDER_MAINTAIN** | **CRM_ORDER** |
|---|---|---|---|
| EMPTY | 19 | 18 | 19 |
| BBPCRM | 4159 | 3829 | 4744 |
| LOCAL | 295 | 287 | 298 |
| PI_BASIS | 90 | 96 | 96 |
| SAP_ABA | 1637 | 1101 | 1672 |
| SAP_AP | 439 | 322 | 488 |
| SAP_BASIS | 25903 | 25704 | 26053 |
| WEBCUIF | 47 | 45 | 49 |
| **Total** | 32589 | 31402 | 33419 |
| **Number of Paths** | 47896 | 45962 | 49354 |

Thus, the calculated number of dependencies for the software unit CRM_ORDER_READ is 32,589 and the calculated number of dependencies for CRM_ORDER_MAINTAIN is 31,402. 47,896 is the number of connections between software units. Thus, the present disclosure can be applied on the scale of a very large software application, where even a simple process step may have thousands of dependencies, and not just to the simple examples that follow.

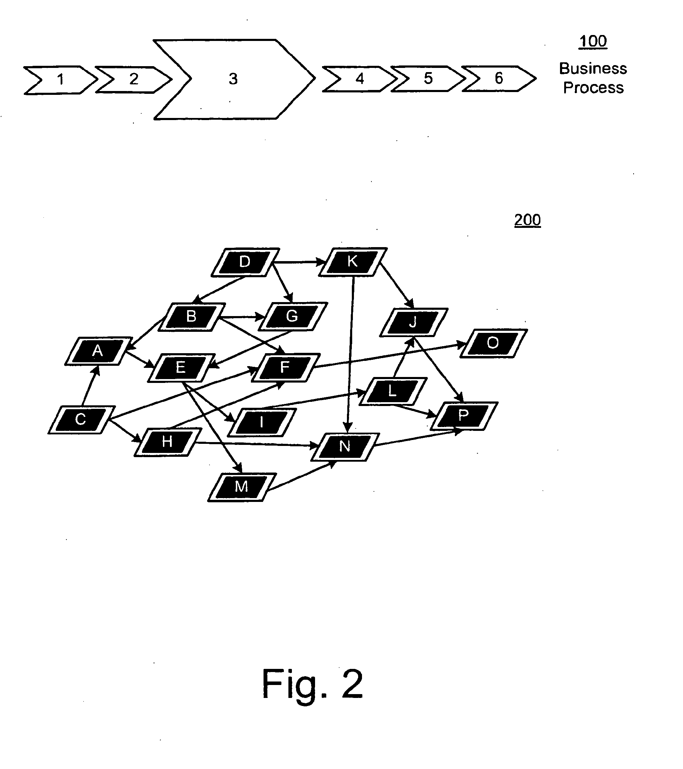

In fig. 2 a schematic of a business process 100 is shown. This business process 100 comprises the consecutive steps or actions 1, 2, 3, 4, 5, and 6, as indicated by the numbers 1, 2, 3, 4, 5, and 6. Below business process 100 a schematic indication of computer code 200 is displayed; computer code 200 may be object oriented code such as ABAP. The code 200 is comprised of several code elements. In the present example, the code 200 is comprised of objects A, B, C, D, E, F, G, H, I, J, K, L, M, N, O, and P (herein 'A-P'). The relations between the objects A-P is indicated by arrows. In figures 2 to 8B , each arrow signifies a direct dependency between the respective objects. However, relations can indicate other relationships, in particular, those listed above under the properties of objects in object oriented programming like encapsulation, inheritance and polymorphism.

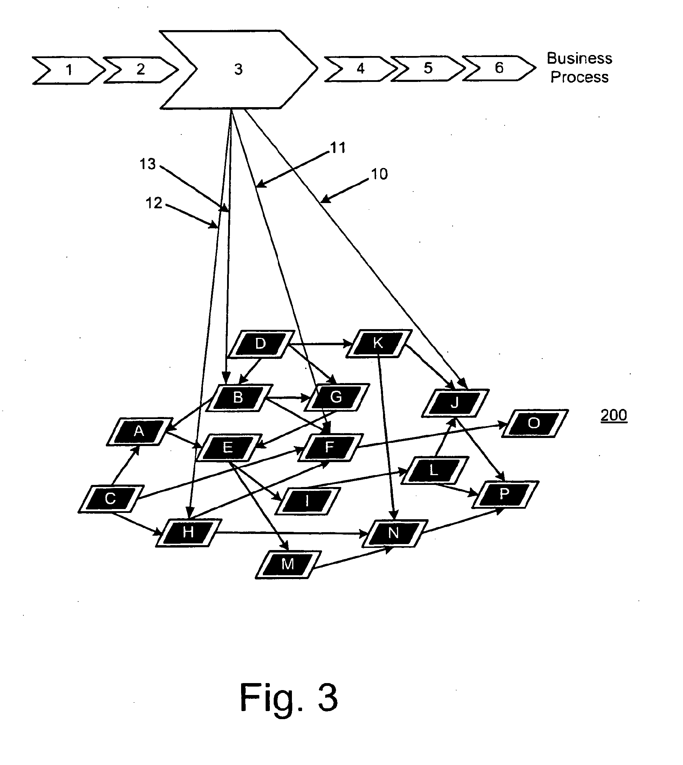

In fig. 3 the arrows 10, 11, 12, and 13 indicate objects that are known to be used by the step or action 3 of the business process.

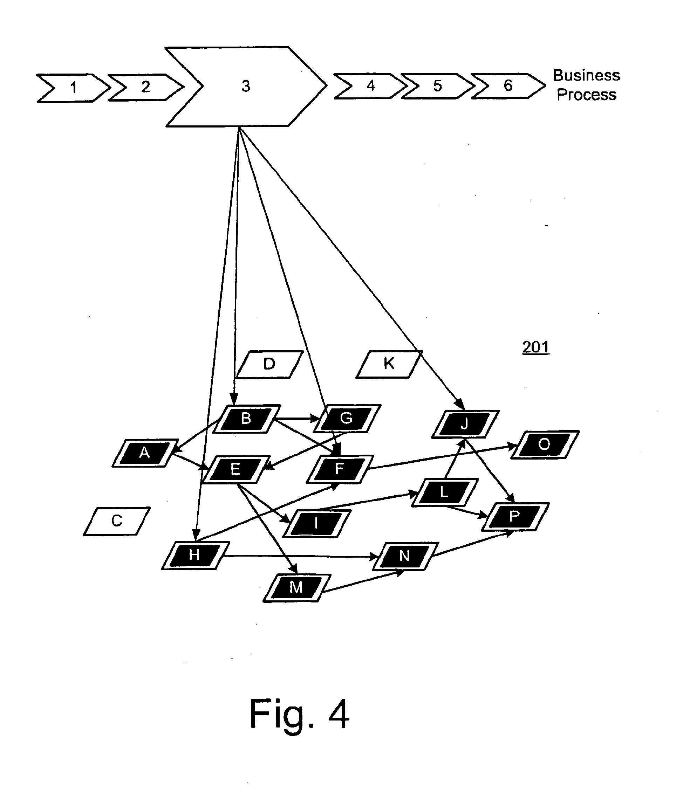

In fig. 4 a code change is depicted. In the specific example of fig. 4, the objects C, D, and K are deleted or removed from the now changed or amended code 201. Note that the relationships of the objects C, D, and K are also removed. This directly impacts the elements N, G, B, A, J, F, and H, as they had relations with the removed elements C, D, and K as shown in fig. 2. Thus, according to the example, the directly impacted elements may be understood as dependency changes. The dependency changes may be determined by a dependency analyzer (as shown in fig. 9).

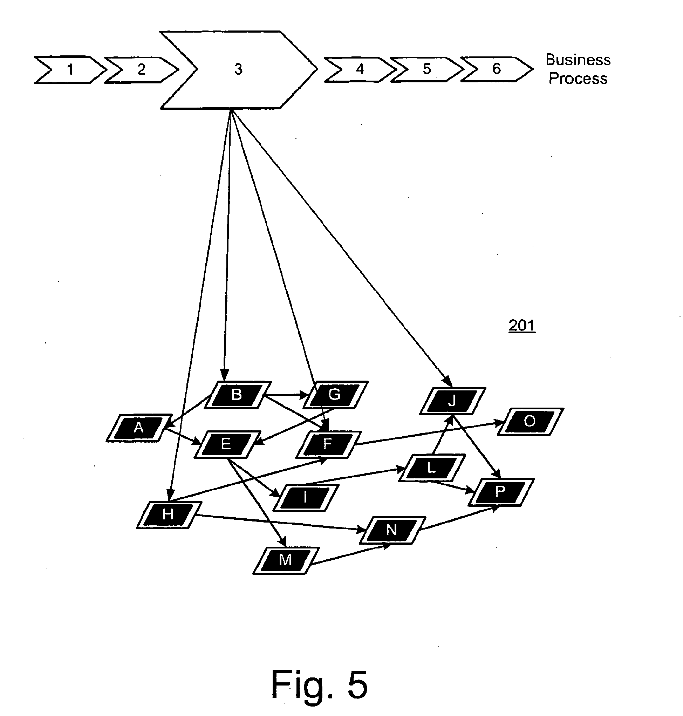

In fig. 5 the final changed code 201 is shown without the removed objects C, D, and K.

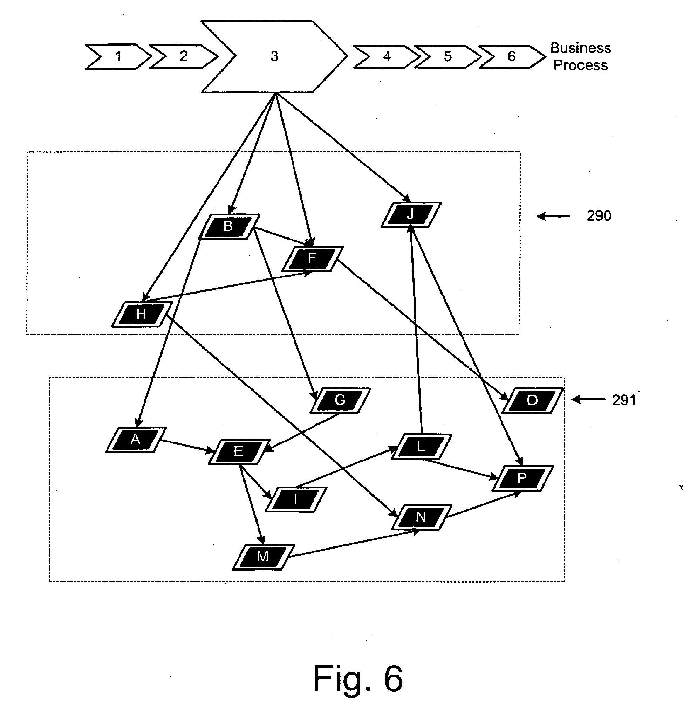

In fig. 6 the software units in the form of objects B, F, J, and H are shown at 290, elevated above the other software units at 291. These objects B, F, J, and H are software units which are known to be used for process step or action 3.

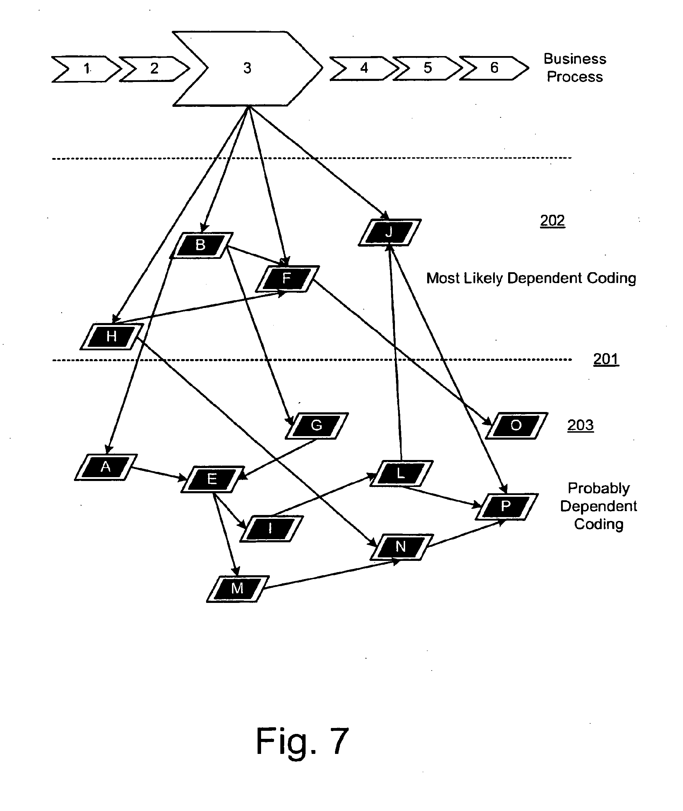

In fig. 7 the code elements are arranged in two code section areas 202 and 203, where the code section area 202 contains the software units which have been identified to be used in process step or action 3; and section 203 contains the dependent software units of every software unit in code section 202.

Another aspect of the disclosed subject matter is to provide for a dependent software unit collector. In one example of the disclosed subject matter the dependent software unit collector is implemented to collect known relevant software units for a test case. In a first example of an implementation of the dependent software unit collector according to the disclosed subject matter, the dependent software unit collector is functional to receive information about the relevant software units for each test case, for example (but not limited to) from external sources by code change tracing system or by manual entry. The received information can, for example, be saved in the known dependency database (KDDB) that saves Test Case and Software Unit pairs. The known dependency database saves actually the dependent software units Ksu(T) for each test case T. The KDDB applies a self-learning approach: if a bug is found during testing a test case, and as a result, one or several software units got modified to correct that bug, then those modified software units will be added to the KDDB automatically in case they are not listed in the KDDB yet.

In another example of an implementation of the dependent software unit collector according to the disclosed subject matter, the dependent software unit collector may be configured to perform the following tasks for one or more bugs or errors reported out of a test case: check for related corrections, determine related transports, determine and retrieve corresponding software units in those transports, and save the respective found software units and the test case in the known dependency database (KDDB).

A correction may be understood as a change to a code element in order to fix a bug in the code element. A code element P, such as a process step, may have dependent code elements A and B, where the dependencies of P on A, and of P on B have been defined by a user, e.g. in a design document. In some cases, a bug may be found in another code element, such as code element C, where the bug has an effect on code element P. The dependency of P on C may not have been defined by the user. Accordingly, once the bug in code element C is corrected, the dependency can be tracked in the KDDB.

A transport may be understood as a software package that is used to transfer data from one installation to another. For example, after new features are implemented and tested on a development installation, the new features can be imported into a production system using a transport. One example for a transport is an SAP transport.

According to the disclosed subject matter, any other known suitable way of determining the dependency of software units can be used, and the disclosed subject matter is not limited to the examples shown for determining dependencies. Any activity which could identify the relationship between a software unit and a/some test case(s) (or the other way around) could be used to enrich the KDDB. For example, the software units listed in the design documents for certain features and the corresponding test cases could directly added into the KDDB without further analysis.

Accordingly, one aspect of the disclosed subject matter provides for a code change tracker, for example, in the form of a utility application installed in the software development environment or system. The code change tracker may be provided with functionality to scan transports into the software development environment in a specified timeframe. It is also possible that the code change tracker is provided with functionality to retrieve software units in those transports that have been impacted by code changes, and calculate the count of changes for each software unit. The determined and calculated code changes can be stored in a database, for example by saving data with the identification of a code unit and the associated number of changes, for example in a software unit change database (CHDB).

In some cases, the code elements of an application change over time. Tracking all changes could consume too many storage resources. Accordingly, when a code element causes failure, the code element may be identified and changes to the code element may be tracked. In a specific example, a process step P1 may be composed of one or more code elements. The process step P1 may have two directly dependent code elements A and B. Code element A may have two directly dependent code elements C and D. Code element B may have two directly dependent code elements E and F. Accordingly, process step P1 may be indirectly dependent on code elements C, D, E, and F. However, changes to code elements C, D, E and F may still have an impact on process step P1. In particular, it may be that changes to code elements that P1 is indirectly dependent on have the same impact factor as changes to code elements that P1 is directly dependent on. Thus, the number of levels of dependencies between P1 and a dependent code element (e.g. code element F) may have no effect on the impact of changes to the dependent code element on P1.

A known dependency (e.g. x ⇒ y) may be distinguished from an automatically determined dependency. In particular, a known dependency may refer to a dependency identified by a user. An automatically determined dependency may be determined using a dependency analyzer (e.g. by means of a dependency graph).

One task of a dependency analyzer (also referred to as a software unit dependency analyzer) according to the disclosed subject matter is to determine all - i.e. directly and indirectly - dependent software units for a given test case by using the known dependent software units for that test case as input. Since the number of dependent software units for a given test case is normally much larger than that of the known dependent software units, distinguishing between the known dependent software units and those determined by the software unit dependency analyzer can help keep the most relevant knowledge about the dependency between a test case and the underlying software units in a persistent way. In particular, the persistent storage of known dependencies may be implemented via the KDDB. Additional dependencies may be determined at runtime by using the dependency analyzer. The KDDB can therefore be understood as a kind of "key" to the dependency "labyrinth", since it enables known dependencies to be distinguished from automatically determined dependencies.

According to the disclosed subject matter, the same smallest granularity level for describing code changes as that used in an SAP transport system or software development environment can be used for describing code changes.

The impact of code changes on the product quality of the code can be assessed according to the disclosed subject matter using several mechanisms, for example, two complimentary mechanisms are changes in the dependencies between different software units in a given timeframe and the changes within a software unit in a given timeframe.

In another aspect of the disclosed subject matter, another approach can be used to evaluate the impact of code changes on product quality, in particular one that is non-deterministic. In this implementation, the dependent software unit collector is used as described before. Also the software unit dependency graph generator is used as described before. Also, accordingly, the code change tracker is used to monitor code changes. Thus, the software unit dependency analyzer, possibly combined with the impact assessment engine, can perform the following approach, which is in this example non-deterministic inference.

In a first step or action the directions in the relationships in the software unit dependency graph are removed and converted into an undirected graph.

In a second step or action, all related test cases are determined for each software unit, e.g. in the known dependency database.

A third step or action is, for each changed software unit and a given number n, to find the nearest n test cases in the undirected graph that was generated in the first step. Changed software units may be stored in a software unit change database

In a fourth step, data gathered in step three is collected and a test relevancy ranking is determined, for example by providing an ascending or descending ranking of the affected test cases.

The disclosed subject matter is not limited to the shown example of deriving a dependency graph; the disclosed subject matter can be implemented with any known suitable means or method of deriving or determining the interdependencies between software units in software code.

After determining the changes, the impact of the changes on the code can be determined. According to one example of an embodiment of the disclosed subject matter, the impact of the code changes on the code is determined by a ranking based approach. To this end, an impact factor is associated with each code change, and each code change is ranked according to its respective code change impact factor. The ranking may be referred to as a test relevancy ranking.

In one embodiment of the impact assessment engine according to the disclosed subject matter, the impact assessment engine provides a quantitative assessment on a given system and in a given timeframe, specified by the start time ts and the end time te.

A number of impact factors may be identified as key impact factors. In a specific example, the impact assessment engine calculates five key impact factors for each test case T. According to the disclosed subject matter any number of key impact factors can be used.

According to the example, five key impact factors are as follows:
1. |Dsu(T,ts)|
2. |Dsu(T,te)| - |Dsu(T,ts)|
3. |Dsu(T,te)|
4. the number of relevant changes, calculated as the sum of "# of changes" in the software change database for all respective software units in Dsu(T,te)
5. the number of changes due to changed dependencies, calculated as the sum of "# of changes" in the software change database for all software units in Dsu(T,te)\Dsu(T,ts) , wherein Dsu(T,te)/Dsu(T,ts) = {s | s∈ Dsu(T,te) ∧ s∉ Dsu(T,ts)}

One or more of the five key impact factors above may be determined by the impact assessment engine as an impact factor for respective changed code elements based on determined dependency changes.

As indicated above, Dsu(T,t) denotes the dependent software units of test case T at time t. Accordingly, Dsu(T,ts) denotes the dependent software units of test case T at start time ts and Dsu(T,te) denotes the dependent software units of test case T at end time te. Moreover, |Dsu(T,t)| = the cardinality of Dsu(T,t). Hence, |Dsu(T,ts)| is the size of the set of dependent software units of test case T at time ts and |Dsu(T,te)| is the size of the set of dependent software units of test case T at time te. Thus, the number of dependency changes for test case T in the timeframe defined by start time ts and end time te is represented by |Dsu(T,te)| - |Dsu(T,ts)| (factor number 2 above). Also, the number of relevant changes (factor number 4 above) may include changes within a software unit.

In summary, impact factors 1 to 3 (as listed above) relate to the dependency graph. In particular, impact factors 1 and 3 relate to the size of the dependency graph before and after one or more changes affecting test case T have taken place. Impact factor 2 reflects the degree of modification of the dependency graph. Impact factors 4 and 5 relate to the number of changes in dependent software units.

As can be seen from the 5 impact factors listed above, in addition to the number of changes to software units, other characteristics of the changes may be significant. Particularly, a change that results in an increase in the number of dependent software units may have a higher impact factor than a change that causes the number of dependent software units to decrease.

Then, in this example of the disclosed subject matter, the impact assessment engine determines and saves the following information into a database: test case identifier, |Dsu(T,ts)|, |Dsu(T,te)| - |Dsu(T,ts)|, |Dsu(T,te)|, the number of relevant changes and the number of changes due to changed dependencies. This is by no means a limiting listing of impact factors, and according to the disclosed subject matter, any other kind and number of data with respect to the impact factors can be determined and stored.

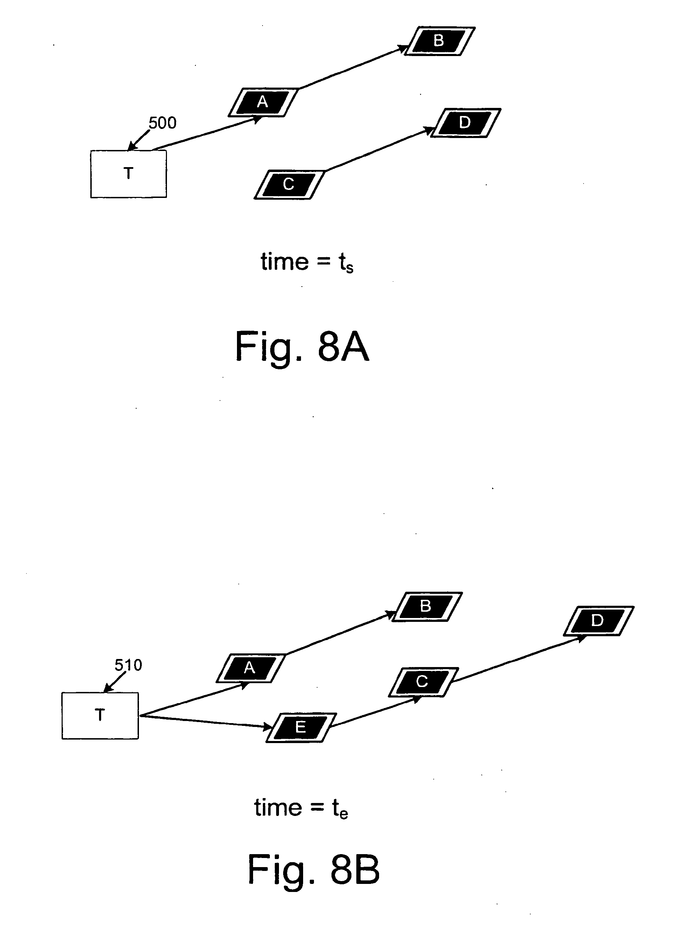

Fig. 8A depicts test case T 500 and code elements A, B, C, and D (A-D) at time ts. At time ts, the test case T 500 is dependent on code element A, and code element A is dependent on code element B. In addition, code element C is dependent on code element D.

Fig. 8B depicts test case T 510 and dependent code elements A, B, C, D, and E (A-E) at time te. Time te occurs after time ts. The difference between time te and time ts may be referred to as a timeframe. At time te, the test case T 510 is dependent on code element A, and code element A is dependent on code element B. Also, the test case T 510 is dependent on code element E. In addition, code element E is dependent on code element C and code element C is dependent on code element D. In between time ts and time te, each code element A-D is changed once.

In the context of Figs. 8A and 8B, the code elements may be considered dependent software units. In a specific example according to Figs 8A and 8B, the code elements A-E may be implemented as objects. A difference between the test case T 500 and the test case T 510 may be the changed dependencies; this may be the only difference between test case T 500 and test case T 510. Thus, the test case T 500 refers to the test case T at time ts and the test case T 510 refers to the test case T at time te. The dependencies depicted in Figs. 8A and 8B may be identified as internal dependencies.

The impact factors mentioned above may be assessed for the test case T in the context of Figs. 8A and 8B. In particular |Dsu(T,ts)| is 2, i.e. code elements A and B. |Dsu(T,te)| is 5, i.e. code elements A, B, C, D, and E. Accordingly, |Dsu(T,te)|- |Dsu(T,ts)| is 3, i.e. 5-2. Moreover, the number of relevant changes is 5, reflecting the changes to code elements A and B, and the addition of code elements C, D, and E as dependencies of the test case T. The number of changes due to changed dependencies is 3, reflecting the changes to the code elements E, C, and D as dependencies of the test case T. Thus, examples of changes in internal dependencies between code elements may be the addition or removal of one or more dependencies.

In the example of Figs. 8A and 8B,. test case T may be selected as a test to be performed if one or more impact factors for test case T are higher (i.e. have higher values) than the corresponding impact factors for other test cases. For example, if the number of relevant changes for test case T1 is 3 and the number of changes due to changed dependencies for test case T1 is 1, then test case T may be selected as a test to be performed and test case T1 might not be selected if only one test case can be performed, e.g. due to resource constraints.

After determining the impact factors, the determined and collected results can be ranked, for example by ranking one or more key impact factors (e.g. one or more of the five key impact factors listed above). By quantitatively assessing the impact of the respective code changes on the test case by means of different key impact factors, rankings of the key impact factors for the considered test cases can be determined. Based on the ranking, a selection of tests can be determined. In particular, tests may be selected based on code evolution in the form of code changes. In addition, tests may be selected based on the determined code complexity, and code sensitivity. Thus, ranking based on code changes and ranking based on other methods, such as code complexity or sensitivity may be complement each other. Accordingly, software testing can be optimized with respect to the available resources, improving the utility of tests with regard to software quality. After determining the ranking, the corresponding test cases are selected and the selected test cases are run against the code. Performing test cases against code is known in the art, and any suitable test system and method can be employed. The result of the tests is recorded, stored in a database, and reported. Also the reporting of the test results is known in the art, and according to the disclosed subject matter any suitable means of testing can be employed.

In some cases, software complexity can be measured according to a set of metrics, such as statement count and/or the number of cycles in a control flow graph. A measurement of relative complexity, in comparison to a baseline, may also be used. The measured complexity of the software may increase according to the number of faults or errors in the software. In other words, the fault potential of the software may be proportional to the complexity of the software. Sensitivity of software may be understood as the ability of code to hide faults from one or more test cases. In some cases, software sensitivity is proportional to the number of inputs for which faulty code will produce a correct result.

Fig. 9 shows an example of a system 400 according to an embodiment of the disclosed subject matter. The system 400 comprises a dependency graph generator 401 as described above. Further comprised are a Known Dependent Software Unit Collector (KDC) 402. The KDC 402 collects as many relevant software units for each test case as possible, according to two approaches, an active approach and a passive approach.

The active approach includes the following two steps. In step 1, the responsible developers will be asked to provide information about the relevant software units for each test case. This might happen during quick checks (also referred to as QuickChecks), at the end of development. The information about relevant software units will be saved in the KDDB in (Test Case, Software Unit) pairs. Thus, the KDDB saves the dependent software units Ksu(T) for each test case T. Step 2 may be performed for each internal message. In step 2, all related transports mentioned in the message and the related test case are entered into a database while verifying the message. Then a small utility application in BRICAT will determine all touched software units in those transports (i.e. software units those transports affect) and save them together with the test case in the KDDB.

According to the passive approach, for each internal message created out of a test case, a utility application may perform the following steps:
- check all related corrective measures (if any),
- determine the related transports (if any),
- get all software units in those transports, and
- save all found software units and the test case in the KDDB.

Continuing the passive approach, the set of dependent software units for a given test case may be obtained at runtime and entered into the KDDB. This part of the passive approach may be carried out using the ABAP Code Coverage Analyzer and Performance Tracer.. The dependencies identified using the KDC may serve as a basis for determining dependencies between code elements using a dependency graph.

Also included is a dependency analyzer 403, as described above. Additionally, comprised is a code change tracker 404 according to the disclosed subject matter described above and an impact assessment engine 405 according to the disclosed subject matter mentioned before. Furthermore a test system 406 is part of the system 400 that is implemented to conduct tests according to the disclosed subject matter as described above.

A weighting mechanism for connections or edges in a software unit dependency graph can help differentiate between important dependencies (e.g. dependencies that are heavily used) and less important dependencies. For example, a number could be assigned to a connection from a caller object to a called object based on the number of calls that will be made from the caller object to the called object. This may enhance the accuracy and reliability of the assessments.

The disclosed subject matter can be used for any computer programming code that has discernible software units. The idea itself is not only applicable for SAP-related software development projects, but also for software development projects utilized with a software logistic system which supports code change tracking.

According to an aspect, a method for testing software code in a computer system is provided. The method may comprise determining code elements in a software code; determining, by a code change tracker, changed code elements in the software code; determining dependencies between the code elements; determining, by a dependency analyzer, dependency changes between code elements based on the determined changed code elements; determining, by an impact assessment engine, an impact factor for the respective changed code elements based on the determined dependency changes; determining a test relevancy ranking for code tests based on the determined impact factor; selecting code tests for the software code based on said test relevancy ranking; and performing the selected tests on the software code.

The method may further comprise determining a dependency between code elements based on a dependency graph.

Also, the method may further comprise storing test results gained with performing the selected tests in a database.

The method may also comprise determining the impact factor based on a weighting evaluation.

In some cases, determining changed code elements comprises storing an identification of the determined changed code element(s) and an associated number of changes in a database.

Also, determining an impact factor for the respective changed code elements may comprise determining the impact factor based, at least in part, upon changes in the internal dependencies between respective code elements within one or more predetermined timeframes.

Moreover, determining an impact factor for the respective changed code elements may comprise ranking the impact of the changes within the changed code elements according to the complexity and/or sensitivity of the code elements.

The method may further comprise determining a dependency between code elements based on a dependency graph; converting the dependency graph into a non-directed graph; selecting code tests for the software code based on said dependency changes; determining a plurality of selected code tests based upon the non-directed graph; executing the determined plurality of selected code tests; and evaluating the impact of the changed code elements on the tested software code.

According to another aspect, an apparatus is provided. The apparatus may comprise a code change tracker configured to: determine in a software code, and determine changed code elements in the software code. The apparatus may also comprise a dependency analyser configured to: determine dependencies between the code elements, and determine dependency changes between code elements based on the determined changed code elements. The apparatus may also comprise an impact assessment engine configured to: determine an impact factor for the respective changed code elements based on the determined dependency changes, and determine a test relevancy ranking for code tests based on the determined impact factor. The apparatus may also comprise a test system configured to: select code tests for the software code based on said test relevancy ranking, and perform the selected tests on the software code.

In some cases, the apparatus further comprises a dependency graph generator configured to generate a dependency graph showing dependencies between code elements. The dependency analyser may be configured to determine dependencies between the code elements based, at least in part, upon the dependency graph.

The test system may be configured to store test results, gained as a result of performing the selected tests, in a database.

Also, the impact assessment engine may be configured to determine the impact factor based on a weighting evaluation.

In some cases, the code change tracker is configured to store an identification of the determined changed code element(s) and an associated number of changes in a database.

The impact assessment engine may be configured to determine the impact factor based, at least in part, upon changes in the internal dependencies between respective code elements within one or more predetermined timeframes.

Accordingly, the impact assessment engine may be configured to rank the impact of the changes within the changed code elements according to the complexity and sensitivity of the code elements.

The dependency analyser may be configured to: determine a dependency between code elements based on a dependency graph, and convert the dependency graph into a non-directed graph. Also, the impact assessment engine may be configured to: select code tests for the software code based on said dependency changes, determine a plurality of selected code tests based upon the non-directed graph, and evaluate the impact of the changed code elements on the software code based, at least in part, upon the plurality of selected code tests.

According to yet another aspect, an article of manufacture having computer readable instructions stored thereon for execution by a processor to perform a method for testing software code is provided. The method may comprise determining code elements in software code, determining changed code elements in the software code, determining dependencies between the code elements, determining dependency changes between code elements based on the determined changed code elements, determining an impact factor for the respective changed code elements based on the determined dependency changes, determining a test relevancy ranking for code tests based on the determined impact factor, selecting code tests for the software code based on said test relevancy ranking, and performing the selected tests on the software code.

Also, the article of manufacture, having computer readable instructions stored thereon for execution by a processor to perform a method for testing software code, the method possibly comprising determining the dependency between code elements based on a dependency graph.

Moreover, the article of manufacture, having computer readable instructions stored thereon for execution by a processor to perform a method for testing software code, the method possibly comprising storing test results gained with performing the selected tests in a database.

Furthermore, the article of manufacture, having computer readable instructions stored thereon for execution by a processor to perform a method for testing software code, the method possibly comprising determining the impact factor based on a weighting evaluation.

Embodiments of the various techniques described herein may be implemented in digital electronic circuitry, or in computer hardware, firmware, software, or in combinations of them. Implementations may be implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program, such as the computer program(s) described above, can be written in any form of programming language, including compiled or interpreted languages, and can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps may be performed by one or more programmable processors executing a computer program to perform functions by operating on input data and generating output. Method steps also may be performed by, and an apparatus may be implemented as, special purpose logic circuitry, e.g., an FPGA(field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both.

Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in special purpose logic circuitry, like for example hardware accelerated computing.

To provide for interaction with a user, implementations may be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Implementations may be implemented in a computing system that includes a back-end component, e.g., as a data server, or that includes a middleware component, e.g., an application server, or that includes a front-end component, e.g., a client computer having a graphical user interface or a Web browser through which a user can interact with an implementation, or any combination of such back-end, middleware, or front-end components. Components may be interconnected by any form or medium of digital data communication, e.g., a communication network. Examples of communication networks include a local area network (LAN) and a wide area network (WAN), e.g., the Internet.

## Claims

1. A method for testing software code (200) in a computer system comprising:
determining code elements in software code (200);
determining, by a code change tracker (404), changed code elements in the software code (200);
determining dependencies between the code elements, comprising determining the dependencies between the code elements using a dependency graph;
determining, by a dependency analyzer (403), dependency changes between code elements based on the determined changed code elements;
determining, by an impact assessment engine (405), one or more impact factors for the respective changed code elements based on the determined dependency changes, wherein one of the impact factors reflects a degree of modification of the dependency graph during a timeframe in which the dependency changes between code elements have taken place;
determining a test relevancy ranking for code tests based on the determined impact factors;
selecting code tests for the software code (200) based on said test relevancy ranking; and
performing the selected tests on the software code (200).

2. The method according to claim 1, further comprising storing test results gained by performing the selected tests in a database.

3. The method according to claim 1 or 2, the method further comprising determining the impact factors using a weighting evaluation, wherein the weighting evaluation differentiates between heavily used dependencies and less used dependencies in the dependency graph.

4. The method according to any one of claims 1 to 3, wherein determining changed code elements comprises storing an identification of the determined changed code element(s) and an associated number of changes in a database.

5. The method according to any one of claims 1 to 4,
wherein the timeframe refers to a difference between an end time te and a start time ts, wherein the time te occurs after the time ts; and preferably,
wherein determining the impact factors for the respective changed code elements comprises ranking the impact of the changes within the changed code elements according to the complexity and/or sensitivity of the code elements.

6. The method according to any one of claims 1 to 5, wherein the dependency graph is a directed graph; the method further comprising:
converting the dependency graph into a non-directed graph;
selecting the code tests for the software code (200) based on said dependency changes;
determining a plurality of the selected code tests based upon the non-directed graph;
executing the plurality of selected code tests; and
evaluating the impact of the changed code elements on the tested software code (200).

7. An apparatus comprising:
- a code change tracker (404) configured to:
-- determine code elements in software code (200), and
-- determine changed code elements in the software code (200);
- a dependency graph generator (400) configured to:
- - generate a dependency graph showing dependencies between code elements;
- a dependency analyser (403) configured to:
-- determine the dependencies between the code elements based upon the dependency graph, and
-- determine dependency changes between the code elements based on the determined changed code elements;
- an impact assessment engine (405) configured to:
-- determine one or more impact factors for the respective changed code elements based on the determined dependency changes, wherein one of the impact factors reflects a degree of modification of the dependency graph during a timeframe in which the dependency changes between code elements have taken place; and
-- determine a test relevancy ranking for code tests based on the determined impact factors; and
- a test system (406) configured to:
-- select code tests for the software code (200) based on said test relevancy ranking, and
-- perform the selected tests on the software code (200).

8. The apparatus of claim 7, wherein the test system (406) is configured to store test results, gained as a result of performing the selected tests, in a database.

9. The apparatus of claim 7 or 8, wherein the impact assessment engine (405) is configured to determine the impact factor based on a weighting evaluation, wherein the weighting evaluation differentiates between heavily used dependencies and less used dependencies in the dependency graph.

10. The apparatus of any one of claims 7 to 9, wherein the code change tracker (404) is configured to store an identification of the determined changed code element(s) and an associated number of changes in a database.

11. The apparatus of any one of claims 7 to 10, wherein the timeframe refers to a difference between an end time te and a start time ts, wherein the time te occurs after the time ts.

12. The apparatus of any one of claims 7 to 11, wherein the impact assessment engine (405) is configured to rank the impact of the changes within the changed code elements according to the complexity and/or sensitivity of the code elements.

13. The apparatus of any one of claims 7 to 12, wherein the dependency graph is a directed graph, and wherein the dependency analyser (403) is configured to:
convert the dependency graph into a non-directed graph; and wherein the impact assessment engine (405) is configured to:
select code tests for the software code (200) based on said dependency changes,
determine a plurality of selected code tests based upon the non-directed graph, and
evaluate the impact of the changed code elements on the software code (200) based, at least in part, upon the plurality of selected code tests.

14. An article of manufacture having computer readable instructions stored thereon for execution by a processor to perform a method according to any one of claims 1 to 6.

## Patentansprüche

1. Verfahren zum Testen von Softwarecode (200) in einem Computersystem, das umfasst:
Bestimmen von Codeelementen in Softwarecode (200);
Bestimmen geänderter Codeelemente in dem Softwarecode (200), durch einen Code-Änderungs-Tracker bzw. eine Einrichtung zur Verfolgung von Codeänderungen (404);
Bestimmen von Abhängigkeiten zwischen den Codeelementen, was die Bestimmung der Abhängigkeiten zwischen den Codeelementen unter Verwendung eines Abhängigkeitsdiagramms umfasst;
Bestimmen von Abhängigkeitsänderungen zwischen Codeelementen basierend auf den bestimmten geänderten Codeelementen durch einen Abhängigkeitsanalysator (403);
Bestimmen eines oder mehrerer Bedeutungs- bzw. Einflussfaktoren für die jeweiligen geänderten Codeelemente basierend auf den bestimmten Abhängigkeitsänderungen durch eine Einflussbewertungsmaschine (405), wobei einer der Einflussfaktoren einen Grad der Modifikation des Abhängigkeitsdiagramms während eines Zeitrahmens, in dem die Abhängigkeitsänderungen zwischen Codeelementen stattgefunden haben, wiedergibt;
Bestimmen einer Testrelevanzrangfolge für Codetests basierend auf den bestimmten Einflussfaktoren;
Auswählen von Codetests für den Softwarecode (200) basierend auf der Testrelevanzrangfolge; und
Durchführen der ausgewählten Tests für den Softwarecode (200).

2. Verfahren nach Anspruch 1, das ferner das Speichern von Testergebnissen, die gewonnen werden, indem die ausgewählten Tests durchgeführt werden, in einer Datenbank umfasst.

3. Verfahren nach Anspruch 1 oder 2, wobei das Verfahren ferner die Bestimmung der Einflussfaktoren unter Verwendung einer Gewichtungsbewertung umfasst, wobei die Gewichtungsbewertung zwischen häufig verwendeten Abhängigkeiten und weniger verwendeten Abhängigkeiten in dem Abhängigkeitsdiagramm differenziert.

4. Verfahren nach einem der Ansprüche 1 bis 3, wobei die Bestimmung geänderter Codeelemente das Speichern des/der bestimmten geänderten Codeelement(e) und der zugehörigen Anzahl von Änderungen in einer Datenbank umfasst.

5. Verfahren nach einem der Ansprüche 1 bis 4,
wobei der Zeitrahmen sich auf eine Differenz zwischen einer Endzeit te und einer Startzeit ts bezieht, wobei die Zeit te nach der Zeit ts eintritt; und wobei vorzugsweise
die Bestimmung der Einflussfaktoren für die jeweiligen geänderten Codeelemente das In-einen-Rang-Einreihen des Einflusses der Änderungen innerhalb der geänderten Codeelemente gemäß der Komplexität und/oder der Empfindlichkeit der Codeelemente umfasst.

6. Verfahren nach einem der Ansprüche 1 bis 5, wobei das Abhängigkeitsdiagramm ein gerichtetes Diagramm ist; wobei das Verfahren ferner umfasst:
Umwandeln des Abhängigkeitsdiagramms in ein nicht gerichtetes Diagramm;
Auswählen der Codetests für den Softwarecode (200) basierend auf den Abhängigkeitsänderungen;
Bestimmen mehrerer der ausgewählten Codetests basierend auf dem nicht gerichteten Diagramm;
Ausführen der mehreren ausgewählten Codetests; und
Bewerten des Einflusses der geänderten Codeelemente auf den getesteten Softwarecode (200).

7. Vorrichtung, die umfasst:
- einen Code-Änderungs-Tracker (404), der konfiguriert ist, um:
-- Codeelemente in Softwarecode (200) zu bestimmen, und
-- geänderte Codeelemente in dem Softwarecode (200) zu bestimmen;
- einen Abhängigkeitsdiagramm-Generator (400), der konfiguriert ist, um:
-- ein Abhängigkeitsdiagramm zu erzeugen, das Abhängigkeiten zwischen Codeelementen zeigt;
- einen Abhängigkeitsanalysator (403), der konfiguriert ist, um:
-- die Abhängigkeiten zwischen den Codeelementen basierend auf dem Abhängigkeitsdiagramm zu bestimmen, und
-- Abhängigkeitsänderungen zwischen den Codeelementen basierend auf den bestimmten geänderten Codeelementen zu bestimmen;
- eine Einflussbewertungsmaschine (405), die konfiguriert ist, um:
-- einen oder mehrere Einflussfaktoren für die jeweiligen geänderten Codeelemente basierend auf den bestimmten Abhängigkeitsänderungen zu bestimmen, wobei einer der Einflussfaktoren einen Grad der Modifikation des Abhängigkeitsdiagramms während eines Zeitrahmens, in dem die Abhängigkeitsänderungen zwischen Codeelementen stattgefunden haben, wiedergibt;
-- eine Testrelevanzrangfolge für Codetests basierend auf den bestimmten Einflussfaktoren zu bestimmen; und
- ein Testsystem (406), das konfiguriert ist, um:
-- Codetests für den Softwarecode (200) basierend auf der Testrelevanzrangfolge auszuwählen; und
-- die ausgewählten Tests für den Softwarecode (200) durchzuführen.

8. Vorrichtung nach Anspruch 7, wobei das Testsystem (406) konfiguriert ist, um Testergebnisse, die als ein Ergebnis der Durchführung der ausgewählten Tests gewonnen werden, in einer Datenbank zu speichern.

9. Vorrichtung nach Anspruch 7 oder 8, wobei die Einflussbewertungsmaschine (405) konfiguriert ist, um den Einflussfaktor basierend auf einer Gewichtungsbewertung zu bestimmen, wobei die Gewichtungsbewertung zwischen häufig verwendeten Abhängigkeiten und weniger verwendeten Abhängigkeiten in dem Abhängigkeitsdiagramm differenziert.

10. Vorrichtung nach einem der Ansprüche 7 bis 9, wobei der Code-Änderungs-Tracker konfiguriert ist, um eine Kennung des/der bestimmten geänderten Codeelement(e) und eine zugehörige Anzahl von Änderungen in einer Datenbank zu speichern.

11. Vorrichtung nach einem der Ansprüche 7 bis 10, wobei der Zeitrahmen sich auf eine Differenz zwischen einer Endzeit te und einer Startzeit ts bezieht, wobei die Zeit te nach der Zeit ts eintritt.

12. Vorrichtung nach einem der Ansprüche 7 bis 11, wobei die Einflussbewertungsmaschine (405) konfiguriert ist, um den Einfluss der Änderungen innerhalb der geänderten Codeelemente gemäß der Komplexität und/oder der Empfindlichkeit der Codeelemente in einen Rang einzureihen.

13. Vorrichtung nach einem der Ansprüche 7 bis 12, wobei das Abhängigkeitsdiagramm ein gerichtetes Diagramm ist; und wobei der Abhängigkeitsanalysator (403) konfiguriert ist, um:
das Abhängigkeitsdiagramm in ein nicht gerichtetes Diagramm umzuwandeln; und
wobei die Einflussbewertungsmaschine (405) konfiguriert ist, um:
Codetests für den Softwarecode (200) basierend auf den Abhängigkeitsänderungen auszuwählen;
mehrere ausgewählten Codetests basierend auf dem nicht gerichteten Diagramm zu bestimmen;
den Einfluss der geänderten Codeelemente auf den getesteten Softwarecode (200) wenigstens teilweise basierend auf den mehreren ausgewählten Codetests zu bewerten.

14. Herstellungsartikel mit darauf gespeicherten computerlesbaren Anweisungen für die Ausführung durch einen Prozessor, um ein Verfahren nach einem der Ansprüche 1 bis 6 durchzuführen.

## Revendications

1. Procédé de test de code logiciel (200) dans un système informatique comprenant :
la détermination d'éléments de code dans du code logiciel (200) ;
la détermination par un traceur de changement de code (404) d'éléments de code changés dans le code logiciel (200) ;
la détermination de dépendances entre les éléments de code, comprenant la détermination des dépendances entre les éléments de code en utilisant un graphique de dépendance ;
la détermination par un analyseur de dépendance (403) de changements de dépendance entre des éléments de code en fonction des éléments de code changés déterminés ;
la détermination par un moteur d'évaluation d'impact (405) d'un ou plusieurs facteurs d'impact pour les éléments de code changés respectifs en fonction des changements de dépendance déterminés, dans lequel un des facteurs d'impact reflète un degré de modification du graphique de dépendance au cours d'un intervalle de temps pendant lequel les changements de dépendance entre des éléments de code ont eu lieu ;
la détermination d'un classement de pertinence de test pour des tests de code en fonction des facteurs d'impact déterminés ;
la sélection de tests de code pour le code logiciel (200) en fonction dudit classement de pertinence de test ; et
la réalisation des tests sélectionnés sur le code logiciel (200).

2. Procédé selon la revendication 1, comprenant en outre le stockage des résultats de test recueillis en réalisant les tests sélectionnés dans une base de données.

3. Procédé selon la revendication 1 ou 2, le procédé comprenant en outre la détermination des facteurs d'impact en utilisant une évaluation de pondération, dans lequel l'évaluation de pondération fait la différence entre des dépendances fortement utilisées et des dépendances moins utilisées dans le graphique de dépendance.

4. Procédé selon l'une quelconque des revendications 1 à 3, dans lequel la détermination des éléments de code changés comprend le stockage d'une identification du/des élément(s) de code changé(s) déterminé(s) et d'un nombre associé de changements dans une base de données.

5. Procédé selon l'une quelconque des revendications 1 à 4,
dans lequel l'intervalle de temps désigne une différence entre une heure de fin te et une heure de départ ts, dans lequel l'heure te se produit après l'heure ts ; et de préférence,
dans lequel la détermination des facteurs d'impact pour les éléments de code changés respectifs comprend le classement de l'impact des changements au sein des éléments de code changés en fonction de la complexité et/ou sensibilité des éléments de code.

6. Procédé selon l'une quelconque des revendications 1 à 5, dans lequel le graphique de dépendance est un graphique orienté ; le procédé comprenant en outre :
la conversion du graphique de dépendance en un graphique non orienté ;
la sélection des tests de code pour le code logiciel (200) en fonction desdits changements de dépendance ;
la détermination d'une pluralité de tests de code sélectionnés en fonction du graphique non orienté ;
l'exécution de la pluralité de tests de code sélectionnés ; et
l'évaluation de l'impact des éléments de code changés sur le code logiciel testé (200).

7. Appareil comprenant :
- un traceur de changement de code (404) configuré pour :
-- déterminer des éléments de code dans du code logiciel (200), et
-- déterminer des éléments de code changés dans le code logiciel (200) ;
- un générateur de graphique de dépendance (400) configuré pour :
-- générer un graphique de dépendance montrant des dépendances entre des éléments de code ;
- un analyseur de dépendance (403) configuré pour :
-- déterminer les dépendances entre les éléments de code en fonction du graphique de dépendance, et
-- déterminer des changements de dépendance entre les éléments de code en fonction des éléments de code changés déterminés ;
- un moteur d'évaluation d'impact (405) configuré pour :
-- déterminer un ou plusieurs facteurs d'impact pour les éléments de code changés respectifs en fonction des changements de dépendance déterminés, dans lequel un des facteurs d'impact reflète un degré de modification du graphique de dépendance au cours d'un intervalle de temps pendant lequel les changements de dépendance entre des éléments de code ont eu lieu ; et
- déterminer un classement de pertinence de test pour des tests de code en fonction des facteurs d'impact déterminés ; et
- un système de test (406) configuré pour :
-- sélectionner des tests de code pour le code logiciel (200) en fonction dudit classement de pertinence de test, et
-- réaliser les tests sélectionnés sur le code logiciel (200).

8. Appareil selon la revendication 7, dans lequel le système de test (406) est configuré pour stocker des résultats de test recueillis en tant que résultat de la réalisation des tests sélectionnés dans une base de données.

9. Appareil selon la revendication 7 ou 8, dans lequel le moteur d'évaluation d'impact (405) est configuré pour déterminer le facteur d'impact en fonction d'une évaluation de pondération, dans lequel l'évaluation de pondération fait la différence entre des dépendances fortement utilisées et des dépendances moins utilisées dans le graphique de dépendance.

10. Appareil selon l'une quelconque des revendications 7 à 9, dans lequel le traceur de changement de code (404) est configuré pour stocker une identification du/des élément(s) de code changé(s) déterminé(s) et d'un nombre associé de changements dans une base de données.

11. Appareil selon l'une quelconque des revendications 7 à 10, dans lequel l'intervalle de temps désigne une différence entre une heure de fin te et une heure de départ ts, dans lequel l'heure te se produit après l'heure ts.

12. Appareil selon l'une quelconque des revendications 7 à 11, dans lequel le moteur d'évaluation d'impact (405) est configuré pour classer l'impact des changements au sein des éléments de code changés en fonction de la complexité et/ou sensibilité des éléments de code.

13. Appareil selon l'une quelconque des revendications 7 à 12, dans lequel le graphique de dépendance est un graphique orienté, et dans lequel l'analyseur de dépendance (403) est configuré pour :
convertir le graphique de dépendance en un graphique non orienté ; et
dans lequel le moteur d'évaluation d'impact (405) est configuré pour :
sélectionner des tests de code pour le code logiciel (200) en fonction desdits changements de dépendance,
déterminer une pluralité de tests de code sélectionnés en fonction du graphique non orienté, et
évaluer l'impact des éléments de code changés sur le code logiciel (200) en fonction, au moins en partie, de la pluralité de tests de code sélectionnés.

14. Article de fabrication ayant des instructions lisibles par ordinateur stockées sur lui pour l'exécution par un processeur afin de réaliser un procédé selon l'une quelconque des revendications 1 à 6.
